# EUROPEAN PATENT APPLICATION

(11) **EP 0 779 354 A1**
(43) Date of publication of application: **18.06.1997**
(21) Application number: 97102804.8
(22) Date of filing: 26.12.1991
(51) Int. Cl.: C10M 105/38, C10M 171/00

(54) **Refrigerating system for refrigerator**

(30) Priority: 27.12.1990 JP 408137/90
(62) Divisional of application: 92901898.4
(71) Applicant: MATSUSHITA REFRIGERATION COMPANY, Higashiosaka-shi Osaka (JP)
(72) Inventor: Kataoka, Yoshitaka, Ikoma-shi, Nara 630-02 (JP)
(74) Representative: Patentanwälte Leinweber & Zimmermann

(57) **Abstract**

The invention relates to a refrigerating system for use in refrigerators comprising a rotary compressor, an evaporator and a condenser disposed in a refrigerant circulating loop, said refrigerating circulating loop comprising, as a refrigerant, 1,1,1,2-tetrafluoroethane, said system also including a lubricant having a viscosity of 4 to 8 cst at 100 °C and comprising a major component of an ester produced by reacting one or more polyhydric alcohols having 8 or less carbon atoms with one or more monovalent linear or branched fatty acids having 5 to 8 carbon atoms for lubricating said compressor.

## Description

### TECHNICAL FIELD

The present invention relates to a refrigerating system for use in refrigerators which employs 1,1,1,2-tetrafluoroethane as a refrigerant.

### BACKGROUND OF THE INVENTION

Dichiorodifluoromethane (CFC12) which has been heretofore used as refrigerant for refrigerators and the like is required to be entirly out of use until 2000 under the international regulations implemented from 1989 from the standpoint of the environmental protection on the earth because it is a species which destroys undesirably the ozone layer. On the other hand, the production of a replacement for CFC12, 1,1,1,2-tetrafluoroethane (HFC134a) is going to be started.

With respect to lubricants for compressors in the refrigerators, mineral oils or synthetic oils such as alkylbenzenes having a viscosity of 2 to 8 cst (at 100 °C) have been heretofore employed. However, these are little compatibile with the new replacement HFC134a producing problems on refrigerating cycles.

Known lubricants for the HFC134 such as polyether based, polyalkylene glycol based, fluorine based, and the like lubricants have still an insufficient compatibility with the HFC134a though there is somewhat improvement in the compatibility. Moreover, the known lubricants have a high saturation concentration of water dissolved therein so that they could not be used practically in view of their electric insulating properties as well as freezing cycles.

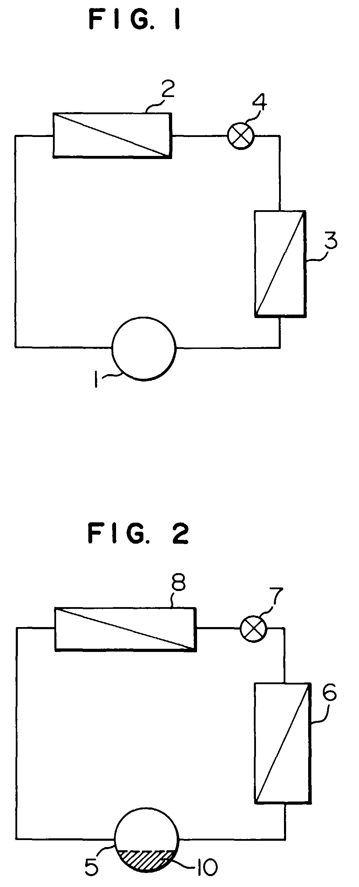

An example of conventional refrigerators as described above will be discussed below with reference to Figures. Figure 1 is a schematic diagram representing the refrigerating cycle of a refrigerating system for conventional refrigerators. Referring to Figure 1, a compressor is designated 1, into which a lubricant operable correctly on the refrigerating cycles is sealed. 2 is an evaporator which can evaporate a refrigerant after passing through a condenser 3 and an expansion valve 4.

Operation of the refrigerator as arranged above will be described with reference to Fig. 1.

First, the refrigerant containing a lubricant compressed in the compressor 1 is condensed in the condenser 3 into a liquid, which is evaporated and heat exchanged in the inside of the evaporator 2 through the expansion valve 4, and then the evaporated refrigerant and lubricant are recycled into the compressor 1.

In this example, the lubricant recirculating in the loop of the refrigerating cycle is generally discharged into the compressor 1 without staying in the inside of the evaporator 2 which is generally at a temperature of -30 °C or less. The lubricant included in the refrigerant as above could be operable in the correct refrigerating cycles specifically in the cryogenic evaporator 2 without staying therein.

The use of the new refrigerant HFC134a in the refrigerating system as above, however, causes problems that the recirculation of the refrigerant is inhibited because the conventional lubricants such as mineral oils or alkylbenzene based synthetic oils are little compatible with the refrigerant and hence the lubricants are separated from the HFC134a in the evaporator 2 with the lubricant staying therein, resulting in a reduction in the performance of the refrigerator.

U.S. Patent No. 4,755,316 describes polyalkylene glycols as lubricants for the HFC134a. This polyalkylene glycols are said to have such a compatibility with the HFC134a as being dissolved therein in a wider range of temperature so that the returns of the lubricants to the compressor in the refrigerating cycles can be improved. However, the lubricants disclosed in the patent have a high saturation concentration of water dissolved therein as high as 1500 ppm or more, and a disadvantage that the recirculation of the refrigerant is inhibited due to freezing of the water contained in the lubricants in the evaporator 2. In addition, the lubricants of the patent are too inferior in electric insulating property to be practically used.

WO-A-9012849, relating to liquid compositions which may be used as refrigeration liquids describes a composition comprising:
(A) a major amount of a fluorine containing a hydrocarbon containing 1 or 2 carbon atoms and
(B) a carboxylic ester.

The use of such a composition in refrigeration systems generally results in an inferior freezing efficiency, i.e. enhanced power consumption of the system. Further, insufficient durability of the composition is generally observed.

US-A-4 851 144 describes a lubricating composition miscible in hydrofluorocarbon and hydrochiorofluorocarbon refrigerants in the range from -20° C to greater than 65° C and having a viscosity greater than 75 centistokes at 38° C comprising:
(A) about 95 to 5% of a polyether polyol and
(B) esters made from polyhydric alcohols with alkanoic acids.

According to SU-A-1 476 272, it is proposed to employ a liquid dryer to reduce the water content in a refrigerating system making use of CFC 12 as a refrigerant to thereby reduce corrosion on the internal surfaces of the units and components.

According to JP-A-2 140 297 and JP-A- 2 140 298 it is proposed to improve the viscosity of a lubricant, used in a fluorocarbon atmosphere, by adding a modified silicone oil to an ester compound having kinematic viscosity of 1 to 50 cst at 100° C.

The present invention provides a refrigerator with the new refrigerant HFC134a which can properly find practical application without inhibiting the refrigerating cycles to overcome the problems as described above.

### DESCRIPTION OF THE INVENTION

A refrigerating system for use in refrigerators according to the present invention comprises such a refrigerating system as having a compressor, an evaporator and a condenser disposed in a refrigerant circulating loop with a refrigerant, 1,1,1,2-tetrafluoroethane (HFC134a), in which a lubricant having a viscosity of 2 to 8 cst (at 100 °C) and comprising a major component of an ester produced by reacting one or more of di- or higher polyhydric alcohols having 8 or less carbon atoms with one or more of monovalent normal chain (linear) or branched fatty acids having 5 to 8 carbon atoms is used for said compressor, and the amount of water present inside said refrigerating system effecting the refrigerating cycles is lower than the saturation concentration of water dissolved in said lubricant. Further, according to the present invention, a lubricant to be used in combination with a rotary compressor is selected to have a viscosity of 4 to 8 cst at 100°C, while a lubricant to be used in combination with a reciprocating compressor is selected to have a viscosity of 2 to 5 cst at 100°C.

### BRIEF DESCRIPTION OF THE DRAWINGS

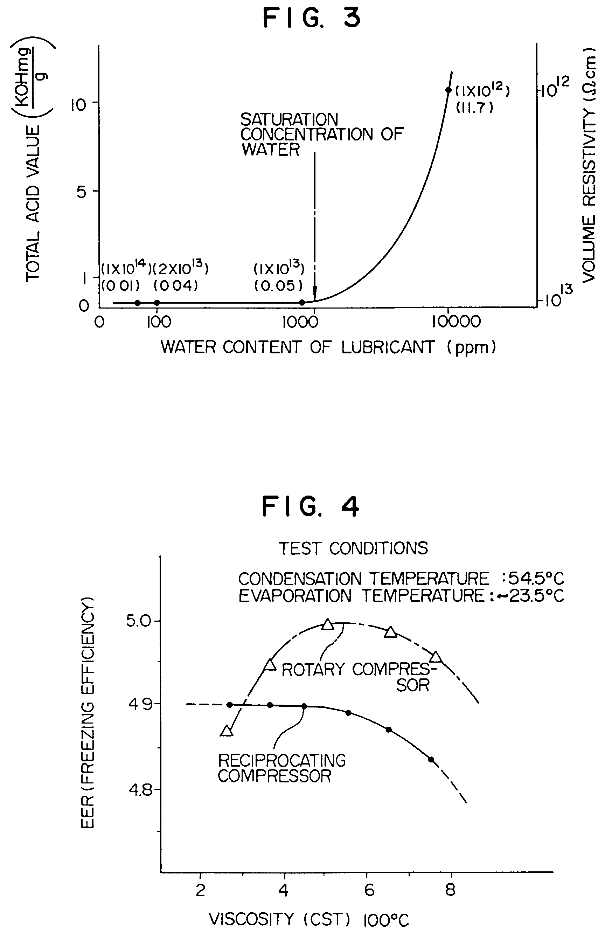

Figure 1 is a diagram of a pipeline of the conventional refrigerating system for use in refrigerators, Figure 2 is a diagram of a pipeline of an embodiment of the refrigerating system for use in refrigerators according to the present invention, Figure 3 is a graph representing the characteristic durability of the lubricant used in the system as shown in Figure 2, and Figure 4 is a graph representing the characteristics of the lubricant as shown in Figure 2 in various compressors.

### MOST PREFERRED EMBODIMENT OF THE PRESENT INVENTION

An embodiment of the refrigerator according to the present invention will be further described with reference to drawings below.

Figure 2 shows a refrigerant circulating system for refrigerators according to an embodiment of the present invention. Referring to Figure 2, the refrigerant circulating system comprises a compressor 5, a condenser 6, an expansion valve 7 and an evaporator 8 which are connected to form a refrigerant circulating loop. As refrigerant, the HFC134a is sealed in the system. 10 is a lubricant tested which has been sealed previously in the compressor. Representative characteristics of the lubricants tested are indicated in Table 1.

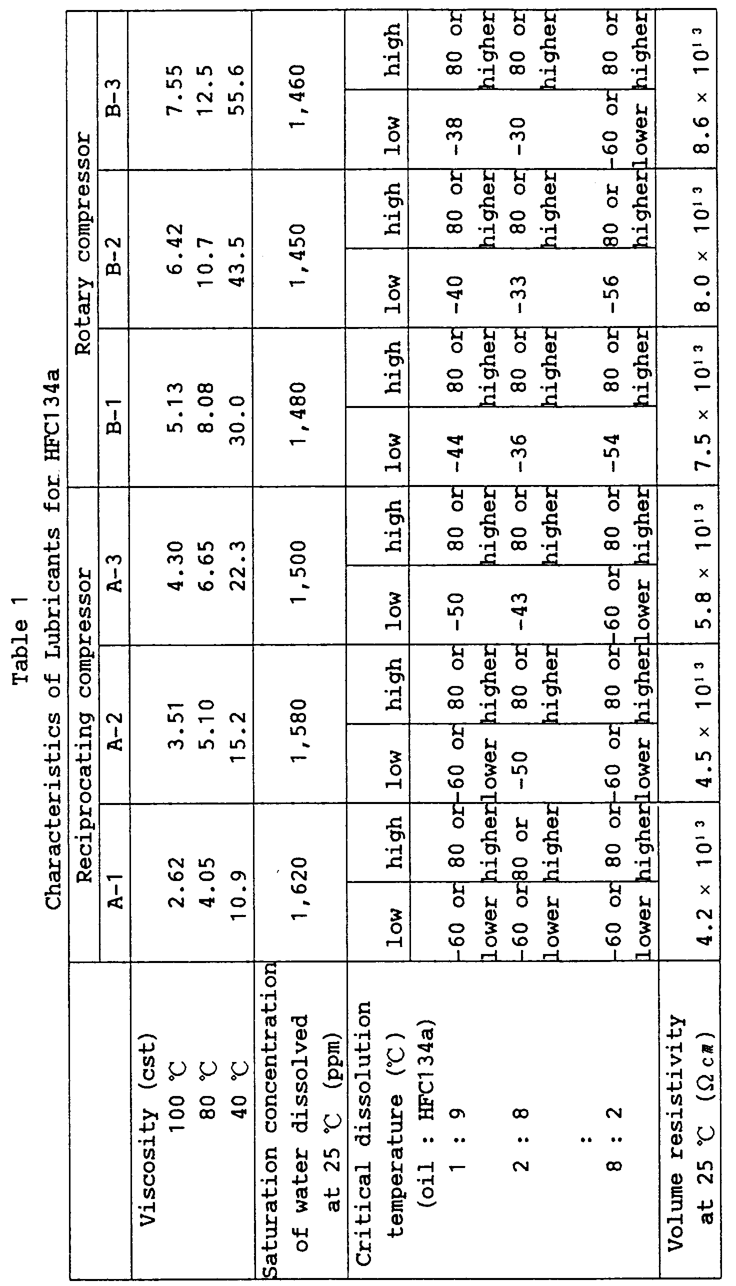

The lubricants indicated in the Table were produced by mixing appropriately pentaerythritol as a polyhydric alcohol having 8 or less carbon atoms with hexanoic acid, heptanoic acid, or isoheptanoic acid as a monovalent fatty acid having 5 to 8 carbon atoms and subjecting to an esterification reaction.

Evaluation of compatibility was made by sealing 0.6 g of a sample of the lubricant and the refrigerant HFC134a in a glass tube, cooling, heating, and measuring high and low temperatures (critical dissolution temperatures) at which two phase separation occurs. Electric insulating properties were determined by measuring volume resistivity at 25 °C according to JISC 2101. Saturation concentration of water dissolved was determined by placing 60 g of a sample of the lubricant in a 100 ml beaker at a temperature of 25 °C and in an atmosphere of a relative humidity of 70 %, and measuring a water concentration after standing open for 72 hours.

As can be seen from the Table 1, the lubricants for the HFC134a are excellent in the compatibility with the HFC134a, and have a lower two phase separation temperature especially in the lower range of temperature. It was also found that they have a higher electric insulating property as indicated by the volume resistivity. Then the lubricants were tested in the operation of a refrigerator with a compressor equipped with the refrigerant circulating system as shown in Figure 1. As a result, an evaporator temperature of -32 °C under a stable freezed state in the refrigerator could be steadily achieved exhibiting the identical performance to that of the conventional refrigerator using a combination of CFC12 with mineral oils. It was found, therefore, that the lubricant has no problem in practice.

Figure 3 shows variations of the total acid value and the volume resistivity, from which the durability of the lubricants under coexsisting with the refrigerant may be evaluated, with a variation in the water content of the lubricants.

As can be seen from Figure 3, when the water content of the lubricants is lower than the saturation concentration of water dissolved, both the acid value and the volume resistivity vary little indicating no degradation of the lubricants. This means that the total water content in the refrigerant circulating system must be lower than the saturation concentration of water dissolved in the lubricants because the water content of the lubricant over the saturation concentration accelerates the reaction (hydrolysis) of the ester component of the lubricants with water.

With the sample lubricant (B-3) whose water content reached the saturation concentration of water of 1460 ppm, the refrigerator equipped with the refrigerant circulating system as shown in Figure 2 was operated for one week. As a result, the temperature of the evaporator 8 became unstable. It was found as a result of investigation that the water content was freezed inside the evaporator 8 inhibiting the refrigerant recirculation. Then, in order to reduce the water content to a level not higher than the saturation concentration of water of the lubricant 10, the water content inside the refrigerating system was forced to be deaired under vacuum to a level of 560 ppm or less and the lubricant 10 was dry-deaired to have a dissolved water content of 80 ppm or less. Therafter, the practical refrigerator could be operated without causing any disorder even after one month had elapsed. It can be said, therefore, that the system can be used well for a practically long period of time.

Figure 4 shows a result of evaluating the freezing ability or freezing efficiency for sample lubricants having a varying viscosity used in a reciprocating compressor and a rotary compressor by means of a calorimetry apparatus based on JIS.

As can be seen from Figure 4, the reciprocating compressor achieved a relatively stable freezing efficiency at a viscosity of 2 to 5 cst (at 100 °C) while the rotary compressor did at a viscosity of 4 to 8 cst (at 100 °C), and generally the use of a lubricant having a viscosity in the range of 2 to 8 cst (at 100 °C) allows provision of a refrigerator having the lowest power consumption.

### POSSIBLE INDUSTRIAL UTILIZATION

As discussed above, the present invention provides a refrigerating system having a stable performance (freezing) and durability for a long period of time without causing any dichlorodifluoromethane gas hazard and operable without increasing power consumption which comprises a compressor, an evaporator and a condenser disposed in a refrigerant circulating loop using the refrigerant, HFC134a (1,1,1,2-tetrafluoroethane), in which a lubricant having a viscosity of 2 to 8 cst (at 100 °C) and comprising a major component of an ester produced by reacting one or more of di- or higher polyhydric alcohols having 8 or less carbon atoms with one or more of monovalent normal or branched fatty acids having 5 to 8 carbon atoms is used for said compressor, and the amount of water present inside said refrigerating system is maintained lower than the saturation concentration of water of said lubricant.

## Claims

1. A refrigerating system for use in refrigerators comprising a rotary compressor, an evaporator and a condenser disposed in a refrigerant circulating loop, said refrigerating circulating loop comprising, as a refrigerant, 1,1,1,2-tetrafluoroethane, said system also including a lubricant having a viscosity of 4 to 8 cst at 100 °C and comprising a major component of an ester produced by reacting one or more polyhydric alcohols having 8 or less carbon atoms with one or more monovalent linear or branched fatty acids having 5 to 8 carbon atoms for lubricating said compressor.

2. A refrigerating system for use in refrigerators comprising a reciprocating compressor, an evaporator and a condenser disposed in a refrigerant circulating loop, said refrigerating circulating loop comprising, as a refrigerant, 1,1,1,2-tetrafluoroethane, said system also including a lubricant having a viscosity of 2 to 5 cst at 100 °C and comprising a major component of an ester produced by reacting one or more polyhydric alcohols having 8 or less carbon atoms with one or more monovalent linear or branched fatty acids having 5 to 8 carbon atoms for lubricating said compressor.
